# EUROPEAN PATENT SPECIFICATION

(11) **EP 3 834 902 B1**
(45) Date of publication and mention of the grant of the patent: **29.07.2026**
(21) Application number: 20748637.4
(22) Date of filing: 23.01.2020
(51) Int. Cl.: B01D 29/17, B01D 29/25, B01D 29/37, C02F 11/12, B01D 29/11, B01D 29/54, B01D 29/64, C02F 11/125, C02F 11/14, C02F 11/18

(54) **ORGANIC SLUDGE TREATMENT FACILITY AND TREATMENT METHOD**
VORRICHTUNG UND VERFAHREN ZUR BEHANDLUNG VON ORGANISCHEN SCHLÄMMEN
INSTALLATION DE TRAITEMENT DE BOUE ORGANIQUE ET PROCÉDÉ DE TRAITEMENT

(30) Priority: 29.01.2019 JP 2019013443
(43) Date of publication of application: 16.06.2021
(73) Proprietor: Tsukishima JFE Aqua Solution Co., Ltd., Tokyo (JP)
(72) Inventor: YAMATO Tsuneo, Tokyo 104-0053 (JP)
(74) Representative: Müller-Boré & Partner Patentanwälte PartG mbB
(86) International application number: PCT/JP2020/002210
(87) International publication number: WO 2020/158551

(56) References cited:
- EP-A1- 0 553 783
- WO-A1-2017/043232
- DE-A1- 3 009 710
- JP-A- 2004 361 006
- JP-A- 2017 170 346
- JP-A- 2017 213 479
- JP-A- 2018 143 921
- US-B1- 8 388 836

## Description

### [Technical Field]

The present invention relates to an organic sludge treatment method for dewatering organic sludge such as sewage sludge generated from, for example, a sewage treatment plant in which such organic sludge is dewatered by dewatering means.

Priority is claimed on Japanese Patent Application No. 2019-013443, filed on January 29, 2019.

### [Background Art]

As dewatering means used in such organic sludge treatment facility and treatment method, for example, Patent Document 1 describes a dewatering device including an outer cylinder screen having a small hole formed on a circumferential wall, a screw shaft provided inside the outer cylinder screen, and a screw blade provided in a spiral shape around the screw shaft. By rotating the screw blade and the screw shaft, a dewatering object put into the outer cylinder screen is compressed while being transported in an axial direction of the screw shaft. Moisture separated from the dewatering object is discharged from the small hole of the outer cylinder screen. The outer cylinder screen has a heating surface to be heated and a filtration surface where the small hole is exposed.

Here, in the filtration device described in Patent Document 1, a heating jacket having a configuration for circulating a heat medium inside is attached to a part of the outer cylinder screen. The portion of the outer cylinder screen, to which the heating jacket is attached, is used as the heating surface, and the heating surface and the filtration surface are alternately and repeatedly disposed in the axial direction of the screw shaft. In such a filtration device, the moisture content of the dewatered sludge is reduced by dewatering the dewatering object transported in the outer cylinder screen while heating the dewatering object by the heating surface of the outer cylinder screen.

JP 2018 143921 A describes a dehydrating apparatus for removing moisture from an object including moisture such as sludge, a dehydrating system including a dehydrating apparatus, and a dehydrating method using a dehydrating apparatus.

EP 0 553 783 A describes a screw type hydroextractor for dewatering various kinds of sludge, such as construction related sludge, sewage sludge, night soil sludge, and pulp sludge, to render them reduced in volume.

DE 30 09 710 A describes a process for mechanically dewatering secondary sewage sludge wherein the underwatered feed stream is passed into a cylindrical mechanical dewatering zone having a porous cylindrical sidewall and therein pressurized by a rotating helical blade.

### [Citation List]

### [Patent Document]

[Patent Document 1]
PCT International Publication No. WO2017/043232

### [Summary of Invention]

### [Technical Problem]

However, in the filtration device described in Patent Document 1, as described above, the portion of the outer cylinder screen, to which the heating jacket is attached, is the heating surface and the small hole separated from the dewatering object such as the filtration surface is not formed on the heating surface. Therefore, if the area of the heating surface is increased in order to further reduce the moisture content of the dewatered sludge, the area of the filtration surface is decreased and moisture separated from the dewatering object cannot be efficiently discharged. On the contrary, if the area of the filtration surface on which the small hole is formed is increased, the area of the heating surface is reduced and the moisture content of the dewatered sludge cannot be reduced.

The present invention is made under such a background, and an object of the present invention is to provide an organic sludge treatment method capable of achieving both a low moisture content and efficient discharge of moisture separated from the organic sludge by heating the organic sludge. The present invention is defined by the independent claim. Preferred examples are defined in the dependent claims.

### [Solution to Problem]

An organic sludge treatment facility includes: dewatering means for dewatering organic sludge. In the dewatering means, a filtration screen that filters the organic sludge is disposed in a casing. The organic sludge is supplied to a first space, and dewatering hot water at a temperature of 50°C or higher and lower than 100°C is supplied from dewatering hot water supply means to a second space among a plurality of spaces in the casing separated by the filtration screen.

Further, an organic sludge treatment method of the present invention is an organic sludge treatment method for dewatering organic sludge by dewatering means, the method including: disposing a filtration screen that filters the organic sludge in a casing in the dewatering means; and supplying the organic sludge to a first space, and supplying dewatering hot water at a temperature in a range of 50°C or higher and lower than 100°C from dewatering hot water supply means to a second space among a plurality of spaces in the casing separated by the filtration screen.

**In** the organic sludge treatment facility and the treatment method configured as described above, in the dewatering means, the organic sludge is supplied to the first space, and the dewatering hot water at the temperature in the range of 50°C or higher and lower than 100°C is supplied from the dewatering hot water supply means to the second space among the plurality of spaces in the casing separated by the filtration screen that filters the organic sludge. Therefore, the organic sludge supplied to the first space is heated by the dewatering hot water supplied to the second space, such that the viscosity of the organic sludge is lowered, and the moisture retained in the organic sludge is separated by thermal denaturation of protein.

Then, since the moisture separated from the organic sludge flows into the second space through the filtration screen and is discharged, the moisture content of the organic sludge can be reduced. Further, since the filtration resistance is decreased by lowering the viscosity of the organic sludge, the discharge of the moisture separated from the organic sludge can be facilitated. Therefore, according to the organic sludge treatment facility and the treatment method having the configuration described above, the moisture content of the dewatered organic sludge can be reduced and the moisture separated from the organic sludge can be efficiently discharged.

Here, when the temperature of the dewatering hot water is lower than 50°C, the effects of lowering the viscosity of the organic sludge and separating the moisture described above cannot be sufficiently obtained. Further, when the temperature of the dewatering hot water exceeds 100°C, it becomes difficult to handle. It is desirable that the temperature of the dewatering hot water is in a range of 60°C or higher and 90°C or lower. The higher the temperature of the dewatering hot water, the more the viscosity of the organic sludge decreases and the separation of the moisture due to the thermal denaturation of the protein is promoted. **In** a case where hot water used in the treatment facility is used as the dewatering hot water, a temperature in a range of 60°C or higher and 90°C or lower is realistic.

Further, in the organic sludge treatment facility, it is desirable that the dewatering means includes an inner filtration screen disposed in the casing and having a cylindrical or conical shape centered on an axis extending in a vertical direction, an outer filtration screen disposed in the casing on an outside of the inner filtration screen with a gap and having a cylindrical or conical shape coaxial with the inner filtration screen, and a ribbon screw that is accommodated between the inner filtration screen and the outer filtration screen in a spiral shape twisting around the axis and is rotated relative to the inner filtration screen and the outer filtration screen centered on the axis, and a space between the inner filtration screen and the outer filtration screen is defined as the first space, and a space inside the inner filtration screen and a space outside the outer filtration screen are defined as the second space.

**In** such a vertical type screw press, while the organic sludge supplied to the first space between the inner filtration screen and the outer filtration screen is transported in the axial direction by the relative rotation of the ribbon screw, the organic sludge is dewatered by using the inner filtration screen and the outer filtration screen as the filtration screen. Therefore, a large filtration area can be secured, and the organic sludge supplied to the first space can be heated from the inside of the first space and the second space on the outside, and thereby the separation of the moisture can be more efficiently promoted.

Further, the organic sludge treatment facility may further include thickening means for thickening the organic sludge that is coagulated by adding a coagulant in a preceding stage of the dewatering means, and the organic sludge thickened by the thickening means may be dewatered by the dewatering means. **In** this case, the thickening hot water supply means also supplies the thickening hot water having a temperature of 50°C or higher and lower than 100°C to the thickening means and the thickening hot water is mixed with the organic sludge. Therefore, the protein can be thermally denatured by heating the organic sludge also in the thickening means, the retained moisture can be separated, and the dewatering efficiency in the dewatering means of the subsequent stage can be further improved.

Also in the thickening means, it is desirable that the temperature of the thickening hot water is in the range of 60°C or higher and 90°C or lower for the same reason as the dewatering hot water supplied to the dewatering means. Further, as described above, in order to further improve the dewatering efficiency in the dewatering means in the subsequent stage, it is desirable that the organic sludge is thickened to a sludge concentration of 5 wt% or higher by the thickening means, and it is more desirable that the organic sludge is thickened to a sludge concentration in a range of 8 wt% to 10 wt%. Further, it is desirable that a coagulant is added to the organic sludge thickened by the thickening means. Furthermore, it is desirable that the dewatering hot water discharged from the dewatering means is circulated and supplied to the thickening means as the thickening hot water supplied to the thickening means.

### [Advantageous Effects of Invention]

As described above, according to the present invention, by heating the organic sludge with the dewatering hot water in the dewatering means, both a low moisture content of the dewatered organic sludge and efficient discharge of moisture separated from the organic sludge by heating the organic sludge can be achieved.

### [Brief Description of the Drawings]

Fig. 1 is a schematic diagram showing a first embodiment of an organic sludge treatment facility.
Fig. 2 is a detailed view of the embodiment shown in Fig.1.
Fig. 3 is a schematic diagram showing a second embodiment of the organic sludge treatment facility.
Fig. 4 is a schematic diagram showing a third embodiment of the organic sludge treatment facility.
Fig. 5 is a schematic diagram showing a fourth embodiment of the organic sludge treatment facility.

### [Description of Embodiments]

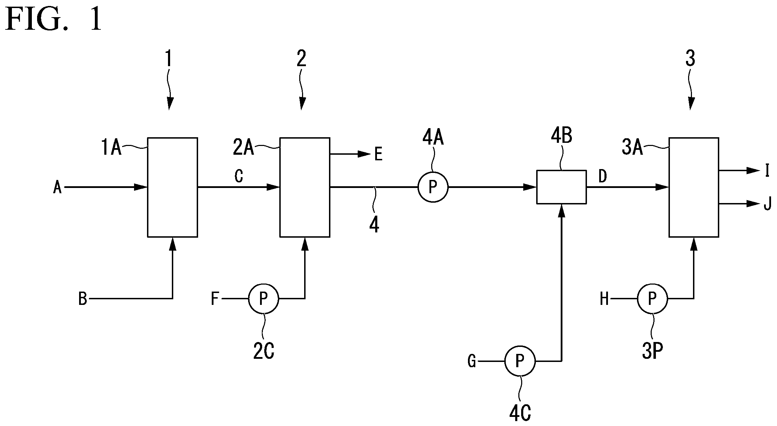

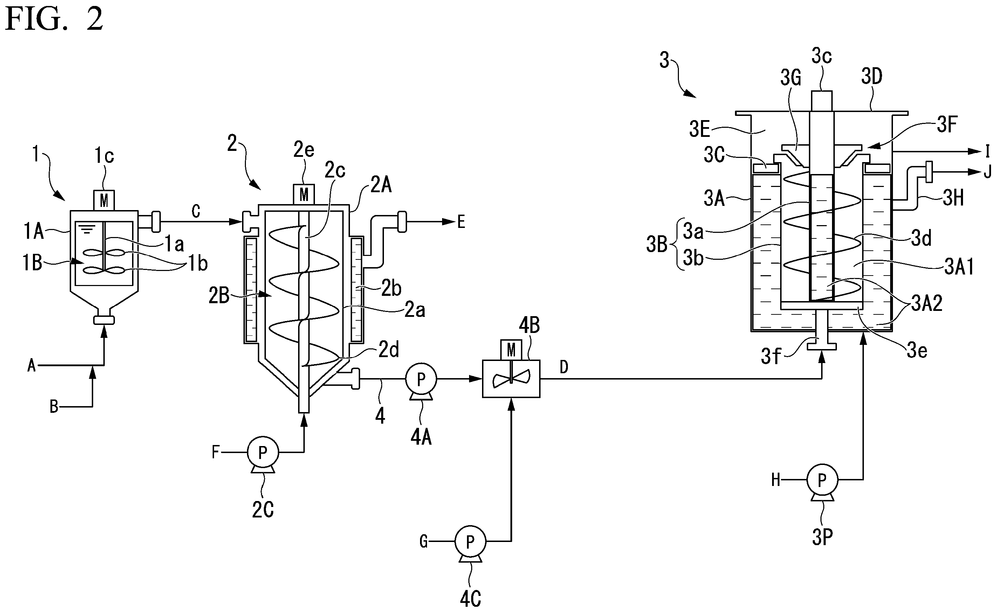

Figs. 1 and 2 show a first embodiment of an organic sludge treatment facility, and an organic sludge treatment method of the present invention is also described while describing below the first embodiment of the organic sludge treatment facility. The organic sludge treatment facility of the present embodiment includes coagulation means 1 for coagulating organic sludge A such as sewage sludge of mixed raw sludge generated and supplied, for example, from a sewage treatment plant by adding a polymer coagulant B to the organic sludge A, thickening means 2 for thickening coagulated sludge C of which a solid content is coagulated to some extent by the coagulation means 1, dewatering means 3 for dewatering thickened sludge D thickened by the thickening means 2, and a thickened sludge supply path 4 which connects the thickening means 2 and the dewatering means 3.

As shown in Fig. 2, the coagulation means 1 includes a bottomed cylindrical coagulation tank 1A having a central axis extending in a vertical direction, in which the organic sludge A and the polymer coagulant B are supplied from the bottom to be held. The coagulation tank 1A is provided with stirring means 1B in which a stirring blade 1b is attached to a rotation shaft 1a along the central axis of the coagulation tank 1A, and which stirs and mixes the organic sludge A and the polymer coagulant B by rotating the rotation shaft 1a and the stirring blade 1b by rotation drive means 1c such as a motor provided on an upper portion of the coagulation tank 1A. The coagulated sludge C, which is stirred and mixed with the polymer coagulant B by the stirring means 1B to be coagulated, is extracted from the upper portion of the coagulation tank 1A and supplied to the thickening means 2.

In the present embodiment, the thickening means 2 is a vertical type filtration thickening device, and includes a bottomed cylindrical thickening tank 2A having a central axis extending in the vertical direction similar to the coagulation tank 1A, in which the coagulated sludge C supplied from the coagulation means 1 is held. The coagulated sludge C is supplied from the upper portion of the thickening tank 2A into the thickening tank 2A. However, the body of the thickening tank 2A is a thickening filtration screen 2a formed of wedge wire, punching metal, or the like, and an outer circumference of the thickening filtration screen 2a is a jacket-like liquid filtration chamber 2b.

Further, in the thickening tank 2A, a screw 2d is attached to a rotation shaft 2c extending along the central axis of the thickening tank 2A, and transporting means 2B is provided for transporting the coagulated sludge C by rotating the rotation shaft 2c and the screw 2d by rotation drive means 2e such as a motor provided on the upper portion of the thickening tank 2A. The coagulated sludge C supplied from the upper portion of the thickening tank 2A is transported downward by the transporting means 2B, and moisture is separated and thickened by the thickening filtration screen 2a, and the coagulated sludge C is thickened at a sludge concentration of 5 wt% or higher, preferably to a sludge concentration in a range of 8 wt% to 10 wt%, extracted from the bottom of the thickening tank 2A, and supplied to the thickened sludge supply path 4 as thickened sludge D.

The bottoms of the thickening tank 2A and the coagulation tank 1A are each formed in a truncated cone shape of which a diameter decreases downward. Further, the moisture separated from the coagulated sludge C by the thickening filtration screen 2a is accommodated in the liquid filtration chamber 2b and treated as wastewater E.

Further, in the first embodiment, from thickening hot water supply means (not shown), thickening hot water F having a temperature in a range of 50°C or higher and lower than 100°C, preferably a temperature in a range of 60°C or higher and 90°C or lower is supplied by a pump 2C to the thickening means 2, and is mixed with the coagulated sludge C supplied from the coagulation means 1.

Here, the rotation shaft 2c of the transporting means 2B of the thickening means 2 has a hollow cylindrical shape, and a large (plurality) number of through-holes are formed in the cylindrical wall portion of the rotation shaft 2c. Then, the thickening hot water F is supplied from a lower end of the rotation shaft 2c into the rotation shaft 2c, ejected from the through-holes, and is supplied to the coagulated sludge C, which is supplied from the coagulation means 1 into the thickening tank 2A and held therein, to be mixed.

Therefore, in the present embodiment, the coagulated sludge C is heated in the thickening means 2, the protein is thermally denatured, the retained moisture is separated and discharged as the wastewater E together with the thickening hot water F, and the thickened sludge D is thickened to the concentration as described above.

The thickened sludge supply path 4 to which the thickened sludge D thus thickened is supplied is provided with a pump 4A that sends the thickened sludge D to the dewatering means 3, and mixing means 4B such as a high-speed mixer is provided between the pump 4A and the dewatering means 3. An inorganic coagulant such as poly-ferric sulfate (PFS) or a coagulant G such as the polymer coagulant is supplied by the pump 4C to the mixing means 4B, and added to the thickened sludge D to be mixed.

In the dewatering means 3 to which the thickened sludge D, where the coagulant G is added and mixed, is supplied, a filtration screen 3B for filtering the thickened sludge D is disposed in a casing 3A, and the thickened sludge D is supplied to a first space 3A1 among a plurality of spaces in the casing 3A separated by the filtration screen 3B.

Here, in the present embodiment, the dewatering means 3 is a vertical type screw press and includes an inner filtration screen 3a as the second filtration screen 3B, which is disposed in the casing 3A and has a cylindrical or conical shape centered on an axis extending in the vertical direction coaxial with the casing 3A, an outer filtration screen 3b which has a cylindrical or conical shape coaxial with the inner filtration screen 3a on the outside of the inner filtration screen 3a with a gap, and is disposed in the casing 3A, and a ribbon screw 3d which is accommodated between the inner filtration screen 3a and the outer filtration screen 3b in a spiral shape twisting around the axis, and is rotated relative to the inner filtration screen 3a and the outer filtration screen 3b centered on the axis by rotation drive means 3c such as a motor.

Then, a space between the inner filtration screen 3a and the outer filtration screen 3b is set as a first space 3A1 to which the thickened sludge D is supplied, and a space inside the inner filtration screen 3a and a space inside the casing 3A and outside the outer filtration screen 3b are set as a second space 3A2. Dewatering hot water H having a temperature in a range of 50°C or higher and lower than 100°C, preferably a temperature in a range of 60°C or higher and 90°C or lower is supplied by a pump 3P from dewatering hot water supply means (not shown) to the second space 3A2. The inner filtration screen 3a and the outer filtration screen 3b are also formed of wedge wire, punching metal, or the like.

The casing 3A has a bottomed cylindrical shape centered on the axis, and the thickened sludge D is supplied from the bottom of the casing 3A to the first space 3A1 via a supply pipe 3f connected to an annular plate-shaped connecting plate 3e that connects the bottoms of the inner filtration screen 3a and the outer filtration screen 3b. The moisture is separated by the inner filtration screen 3a and the outer filtration screen 3b while the thickened sludge D is transported upward by the relative rotation of the ribbon screw 3d.

Further, an annular plate-shaped board 3C is disposed on the upper portion in the casing 3A, and the outer filtration screen 3b is attached to an inner circumferential portion of the board 3C to be fixed. Further, a lid 3D is disposed in an upper opening of the casing 3A above the board 3C, the inner filtration screen 3a is attached to the lid 3D to be fixed, and the rotation drive means 3c is disposed on the lid 3D and rotates the ribbon screw 3d via a cylindrical screw support that covers the upper portion of the inner filtration screen 3a. In the present embodiment, as described above, the inner filtration screen 3a and the outer filtration screen 3b are fixed to the casing, and the ribbon screw 3d is rotated by the rotation drive means 3c, but conversely, the ribbon screw 3d is fixed, and the inner filtration screen 3a and the outer filtration screen 3b may be rotated, or both of the ribbon screw 3d and the combination of the inner filtration screen 3a and the outer filtration screen 3b may be rotated in opposite directions to each other.

Furthermore, an upper space in the casing 3A between the board 3C and the lid 3D is a discharge chamber 3E, and an annular upper opening of the first space 3A1 in the discharge chamber 3E is a discharge port 3F. The discharge port 3F is provided with a squeezing ring 3G having a truncated cone-shaped outer circumferential surface centered on the axis, which goes upward toward an outer circumferential side. Dewatered sludge I dewatered from the thickened sludge D, in which moisture is separated while the thickened sludge D is transported upward in the first space 3A1 by the ribbon screw 3d, flows out from the discharge port 3F to the discharge chamber 3E while being squeezed by the squeezing ring 3G to be discharged.

Further, in the present embodiment, dewatering hot water H is also supplied from the bottom of the casing 3A to the second space 3A2 in the casing 3A. As described above, the dewatering hot water H supplied to the second space 3A2 heats the thickened sludge D in the first space 3A1. Therefore, the protein of the thickened sludge D is thermally denatured, and thereby the retained moisture is separated and filtered by the inner filtration screen 3a and the outer filtration screen 3b. The moisture is discharged as wastewater J from a wastewater pipe 3H raised from the second space 3A2 together with the dewatering hot water H that is cooled by heating the thickened sludge D.

Further, in the organic sludge treatment facility and the treatment method having such a configuration, in the dewatering means 3, among a plurality of spaces disposed in the casing 3A and separated by the filtration screen 3B for filtering the thickened sludge D, the thickened sludge D is supplied to the first space 3A1, and the dewatering hot water H having a temperature in a range of 50°C or higher and a lower than 100°C is supplied from the dewatering hot water supply means to the second space 3A2. Then, as described above, the thickened sludge D supplied to the first space 3A1 is heated by the dewatering hot water H supplied to the second space 3A2, such that the viscosity of the thickened sludge D decreases and the moisture retained in the thickened sludge D is separated by thermal denaturation of the protein.

Then, as described above, the moisture separated from the thickened sludge D is filtered through the filtration screen 3B, flows into the second space 3A2, and is discharged together with the cooled dewatering hot water H. Therefore, the moisture content of the dewatered sludge I discharged from the discharge port 3F to the discharge chamber 3E can be reduced. Further, as described above, since the filtration resistance is reduced by lowering the viscosity of the thickened sludge D, the discharge of the moisture separated from the thickened sludge D into the second space 3A2 can be facilitated. Therefore, according to the organic sludge treatment facility and treatment method having the configuration described above, it is possible to achieve both a low moisture content of the dewatered sludge I and an efficient discharge of the moisture separated from the thickened sludge D.

As the dewatering hot water H and the thickening hot water F, smoke effluent treatment tower wastewater of a sludge incineration facility installed in the organic sludge treatment facility, scrubber wastewater of a sludge drying facility, or hot water generated from a digestion gas generator can be used. Further, it is also possible to heat clean water, sand filtered water, or the like with a boiler to be used.

Here, when the temperature of the dewatering hot water H is lower than 50°C, as described above, the effects of lowering the viscosity of the thickened sludge D and separating the moisture cannot be sufficiently obtained. Further, when the temperature of the dewatering hot water H exceeds 100°C, it becomes difficult to handle. The higher the temperature of the dewatering hot water H, the lower the viscosity of the thickened sludge D and the promotion of the moisture separation due to the thermal denaturation of the protein can be achieved. However, as described above, in a case where the hot water used in the organic sludge treatment facility is used as the dewatering hot water H, the temperature in a range of 60°C or higher and 90°C or lower is realistic.

Further, in the treatment facility of the present embodiment, the dewatering means 3 is the vertical type screw press including the inner filtration screen 3a which is disposed in the casing 3A having a cylindrical or conical shape centered on the axis extending in the vertical direction, the outer filtration screen 3b which is disposed in the casing 3A on the outside of the inner filtration screen 3a with a gap and having a cylindrical or conical shape coaxial with the inner filtration screen 3a, and the ribbon screw 3d which is accommodated between the inner filtration screen 3a and the outer filtration screen 3b in a spiral shape twisting around the axis, and is rotated relative to the inner filtration screen 3a and the outer filtration screen 3b centered on the axis.

A space between the inner filtration screen 3a and the outer filtration screen 3b as the filtration screen 3B is the first space 3A1 to which the thickened sludge D is supplied, and a space inside the inner filtration screen 3a and a space outside the outer filtration screen 3b are the second space 3A2 to which the dewatering hot water H is supplied.

In the vertical type screw press having such a configuration, while the thickened sludge D supplied to the first space 3A1 between the inner filtration screen 3a and the outer filtration screen 3b is transported in the axial direction by the relative rotation of the ribbon screw 3d, the thickened sludge D is dewatered by the inner filtration screen 3a and the outer filtration screen 3b. Therefore, a large filtration area can be ensured and more efficient filtration can be achieved. Further, since the thickened sludge D supplied to the first space 3A1 can be heated by the dewatering hot water H supplied to the inside of the first space 3A1 and the second space 3A2 outside thereof, the separation of moisture by the thermal denaturation of the protein can be promoted more efficiently. Preferably 80% or higher, and more preferably the entire surface of the filtration surfaces of the inner filtration screen 3a and the outer filtration screen 3b, is always in direct contact with the dewatering hot water H. Therefore, in the dewatering process of the thickened sludge D, heating of the thickened sludge D supplied to the first space 3A1 via the filtration screen can be sufficiently performed, and the separation of moisture by thermal denaturation of the protein can be promoted more efficiently. Further, since the filtration surface is always in direct contact with the dewatering hot water H, the filtration surface does not come into contact with the atmosphere. Therefore, clogging due to drying of the filtration surface can be prevented.

However, in the present embodiment, the vertical type screw press including two the filtration screens 3B, that is, the inner filtration screen 3a and the outer filtration screen 3b is used as the dewatering means 3, but it is also possible to use a vertical type screw press in which a screw in a spiral shape twisted around the axis, which is rotated centered on the axis, is disposed in one cylindrical or conical filtration screen centered on the axis extending in the vertical direction, or a lateral type screw press which is described in Patent Document 1. In addition to these, a rotary press or a multi-plate type screw press can also be used.

Further, in the present embodiment, the thickening means 2 thickening the coagulated sludge C, which is coagulated by adding the polymer coagulant B to the organic sludge A in the coagulation means 1, is provided in a preceding stage of the dewatering means 3. The thickened sludge D thickened by the thickening means 2 is dewatered by the dewatering means 3.

Then, the thickening hot water supply means also supplies the thickening hot water F having a temperature in a range of 50°C or higher and lower than 100°C to the thickening means 2 and the thickening hot water F is mixed with the coagulated sludge C. Therefore, also in the thickening means 2 in the preceding stage of the dewatering means 3, the protein can be thermally denatured by heating the coagulated sludge C, and the moisture retained in the coagulated sludge C can be separated to further improve the dewatering efficiency of the dewatering means 3 in the subsequent stage.

Further, as described above, by mixing the thickening hot water F with the coagulated sludge C in the thickening means 2, an coagulation inhibitor contained in the liquid of the coagulated sludge C can be replaced with the thickening hot water F. Therefore, the coagulant G such as poly-ferric sulfate added in the thickened sludge supply path 4 can be prevented from being consumed by the coagulation inhibitor, and the coagulant G can be efficiently reacted with a solid content of the thickened sludge D. Further, by heating the coagulated sludge C with the thickening hot water F, the reactivity between the coagulant G and the thickened sludge D can also be improved, and the amount of the coagulant G added can be reduced.

Even in the thickening means 2, when the temperature of the thickening hot water F is lower than 50°C, the dewatering efficiency in the dewatering means 3 may not be reliably improved, and when it is 100°C or higher, the handleability of the thickening hot water F is impaired. Further, it is desirable that the temperature of the thickening hot water F is in a range of 60°C or higher and 90°C or lower. Furthermore, as described above, in order to further improve the dewatering efficiency in the dewatering means 3 in the subsequent stage of the thickening means 2, it is desirable to thicken the thickened sludge D thickened by the thickening means 2 to a sludge concentration of 5 wt% or higher, and it is more desirable to thicken the thickened sludge D to a sludge concentration in a range of 8 wt% to 10 wt%.

Furthermore, in the present embodiment, the thickening means 2 is the vertical type thickening device in which a screw 2d is attached to a rotation shaft 2c extending along the central axis of the thickening tank 2A extending in the vertical direction, and transporting means 2B is provided for transporting the coagulated sludge C by rotating the rotation shaft 2c and the screw 2d by rotation drive means 2e. However, for example, a belt type thickening device, a drum type thickening device, or a honeycomb type thickening device can also be used as long as it is a thickening device that does not destroy the coagulated sludge C other than a centrifugal thickening device that destroys the coagulated sludge C.

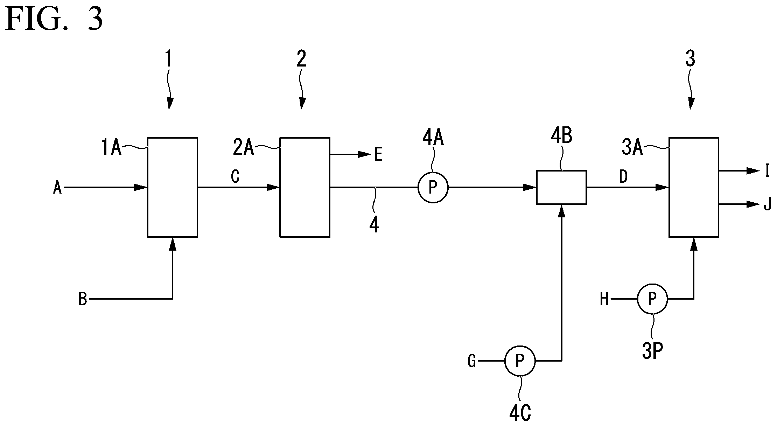

By the way, in the first embodiment, as described above, the thickening hot water F is also added to the coagulated sludge C to be mixed in the thickening means 2, but as in a second embodiment shown in the schematic diagram in Fig. 3, the thickening hot water F may not be supplied to the thickening means 2. In Figs. 3 to 5, the same reference numerals are given to the portions common to those in the schematic diagram shown in Fig. 1.

In such a second embodiment, for example, in a case where the coagulated sludge C, which is coagulated by supplying the organic sludge A having a sludge concentration of 2 wt% and 25°C to the coagulation means 1 at 10 m³/h, is supplied to the thickening means 2, wastewater (separation solution) E at similar 25°C is separated at 7.5 m³/h in the thickening means 2, and the thickened sludge D having a sludge concentration of 8 wt% and 25°C is supplied to the dewatering means 3 at 2.5 m³/h, the dewatering hot water H at 80°C is supplied to the dewatering means 3 at 4.4 m³/h, and wastewater (separation water) J at 60°C is discharged at (1.7+4.4) m³/h. Therefore, the dewatered sludge I in the sludge concentration of 25 wt% and 60°C can be discharged at 0.8 m³/h.

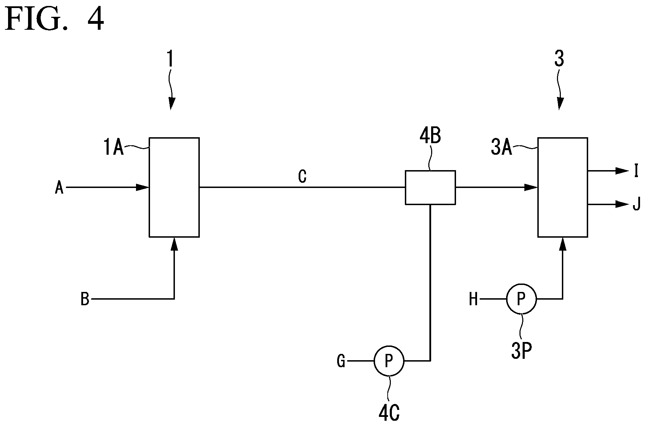

Furthermore, in the first and second embodiments, the coagulated sludge C coagulated by the coagulation means 1 is thickened by the thickening means 2 and then supplied to the dewatering means 3. However, for example, as in a third embodiment of the present invention shown in Fig. 4, the coagulated sludge C may be directly supplied to the dewatering means 3 without providing the thickening means 2.

However, in this case, similar to the second embodiment, when the coagulated sludge C, which is coagulated by supplying the organic sludge A having a sludge concentration of 2 wt% and 25°C to the coagulation means 1 at 10 m³/h, is directly supplied to the dewatering means 3, in order to discharge the dewatered sludge I having the sludge concentration of 25 wt% and 60°C at 0.8 m³/h as in the second embodiment, the dewatering hot water H at 80°C must be supplied to the dewatering means 3 at 17.5m³/h and the wastewater (separation water) J at 60°C must be discharged at (9.2+17.5) m³/h. Therefore, since the supply amount of the dewatering hot water h supplied to the dewatering means 3 is about four times as large, it is desirable that the thickening means 2 is provided in the preceding stage of the dewatering means 3.

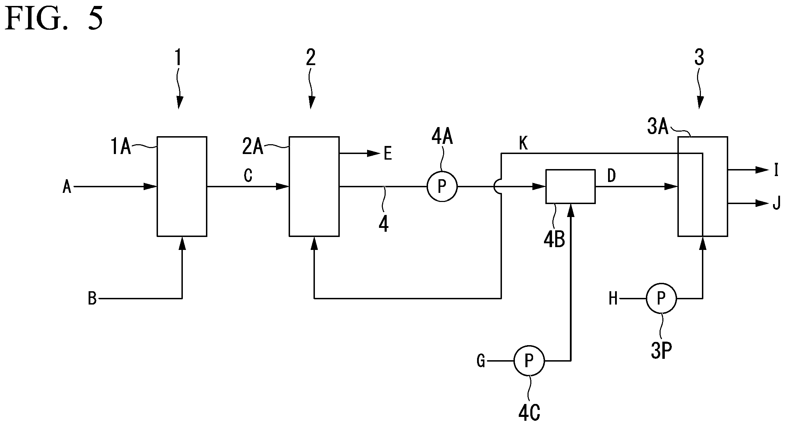

Further, in the first embodiment, the dewatering hot water H supplied to the dewatering means 3 is discharged as the wastewater J, but as in a fourth embodiment shown in the schematic diagram in Fig. 5, the dewatering hot water discharged from the dewatering means 3 may be circulated and supplied to the thickening means 2 as circulating thickening hot water K so as to be reused.

In this case, the dewatering hot water as the circulating thickening hot water K discharged from the dewatering means 3 also includes the separation solution discharged from the dewatering means 3. Therefore, according to the fourth embodiment, the insoluble solid content (SS) in the separation solution can be captured by the thickening means 2 to improve the SS recovery rate. Further, since the residual polymer in the separation solution can be effectively used, the performance of the dewatering means 3 can be improved, and the temperature of the thickened sludge D can be further increased to further improve the dewatering efficiency.

### [Industrial Applicability]

By applying the organic sludge treatment facility of the present application to the relevant field, it is possible to provide an organic sludge treatment facility including dewatering means and a treatment method capable of achieving both a low moisture content and an efficient discharge of moisture separated from the organic sludge by heating the organic sludge.

### [Reference Signs List]

1: Coagulation means
2: Thickening means
3: Dewatering means
3A: Casing
3A1: First space
3A2: Second space
3B: Filtration screen
3a: Inner filtration screen
3b: Outer filtration screen
3c: Rotation drive means
3d: Ribbon screw
4: Thickened sludge supply path
A: Organic sludge
B: Polymer coagulant
C: Coagulated sludge
D: Thickened sludge
E, J: Wastewater
F: Thickening hot water
G: Coagulant
H: Dewatering hot water
I: Dewatered sludge
K: Circulating thickening hot water

## Claims

1. An organic sludge treatment method for dewatering organic sludge (A) by dewatering means (3), in which
the organic sludge (A) added with a polymer coagulant (B) is coagulated by coagulation means (1) to be coagulated sludge (C),
the coagulated sludge (C) is thickened by thickening means (2) to be thickened sludge (D), and
the thickened sludge (D) is dewatered by dewatering means (3),
the method comprising:
disposing one or two filtration screens (3B) that is formed of wedge wire or punching metal and configured to filter the organic sludge (A) in a casing (3A) centered on an axis in the dewatering means (3);
supplying the thickened sludge (D) to a first space (3A1), and supplying dewatering hot water (H) at a temperature of 50°C or higher and lower than 100°C from dewatering hot water supply means to a second space (3A2) among a plurality of spaces in the casing (3A) separated by the one or two filtration screens (3B) , and
moisture is separated from the thickened sludge (D) by the one or two filtration screens (3B) while the thickened sludge (D) is transported by a relative rotation of a ribbon screw (3d) rotated relative to the one or two filtration screens (3B) centered on the axis,
**characterized in that**
the moisture separated from the thickened sludge (D) is filtered through the one or two filtration screens (3B), flows into the second space (3A2), and is discharged together with the cooled dewatering hot water (H).

2. The organic sludge treatment method according to Claim 1,
wherein the temperature of the dewatering hot water (H) is in a range of 60°C or higher and 90°C or lower.

3. The organic sludge treatment method according to Claim 1 or 2,
wherein thickening hot water (F) having a temperature of 50°C or higher and lower than 100°C is supplied from thickening hot water supply means to the thickening means (2) to be mixed with the organic sludge (A).

4. The organic sludge treatment method according to Claim 3,
wherein the temperature of the thickening hot water (F) is in a range of 60°C or higher and 90°C or lower.

5. The organic sludge treatment method according to any one of Claims 3 to 4,
wherein a coagulant (G) is added to the organic sludge (A) thickened by the thickening means (2).

6. The organic sludge treatment method according to any one of Claims 3 to 5,
wherein the dewatering hot water (H) discharged from the dewatering means (3) is circulated and supplied to the thickening means (2) as the thickening hot water (F).

## Patentansprüche

1. Ein Verfahren zur Behandlung von organischem Schlamm zum Entwässern von organischem Schlamm (A) mittels einer Entwässerungseinrichtung (3), bei dem
der mit einem polymeren Koagulans (B) versetzte organische Schlamm (A) durch eine Koagulationseinrichtung (1) zu koaguliertem Schlamm (C) koaguliert wird,
der koagulierte Schlamm (C) durch eine Eindickungseinrichtung (2) zu eingedicktem Schlamm (D) eingedickt wird, und
der eingedickte Schlamm (D) durch eine Entwässerungseinrichtung (3) entwässert wird,
wobei das Verfahren Folgendes umfasst:
Anordnen eines oder zweier Filtersiebe (3B), die aus Keildraht oder Stanzmetall bestehen und konfiguriert dazu sind, den organischen Schlamm (A) in einem Gehäuse (3A) zu filtern, das um eine Achse in der Entwässerungseinrichtung (3) zentriert ist,
Zuführen des eingedickten Schlamms (D) zu einem ersten Raum (3A1), und Zuführen von Entwässerungs-Heißwasser (H) mit einer Temperatur von 50 °C oder höher und unter 100 °C aus einer Entwässerungs-Heißwasser-Zuführeinrichtung zu einem zweiten Raum (3A2) unter einer Vielzahl von Räumen im Gehäuse (3A), die durch das eine oder die zwei Filtersiebe (3B) getrennt sind, und
Abscheiden von Feuchtigkeit aus dem eingedickten Schlamm (D) durch das eine oder die zwei Filtersiebe (3B), während der eingedickte Schlamm (D) durch eine Relativdrehung einer Bandschnecke (3d), die relativ zu dem einen oder den zwei Filtersieben (3B) um die Achse gedreht wird, transportiert wird,
**dadurch gekennzeichnet, dass**
die aus dem eingedickten Schlamm (D) abgeschiedene Feuchtigkeit durch das eine oder die zwei Filtersiebe (3B) gefiltert wird, in den zweiten Raum (3A2) fließt, und zusammen mit dem abgekühlten Entwässerungs-Heißwasser (H) abgeleitet wird.

2. Das Verfahren zur Behandlung von organischem Schlamm nach Anspruch 1,
wobei die Temperatur des Entwässerungs-Heißwassers (H) in einem Bereich von 60 °C oder höher und 90 °C oder niedriger liegt.

3. Das Verfahren zur Behandlung von organischem Schlamm nach Anspruch 1 oder 2,
wobei Eindickungs-Heißwasser (F) mit einer Temperatur von 50 °C oder höher und unter 100 °C aus einer Eindickungs-Heißwasser-Zuführeinrichtung der Eindickungseinrichtung (2) zugeführt wird, um mit dem organischen Schlamm (A) vermischt zu werden.

4. Das Verfahren zur Behandlung von organischem Schlamm nach Anspruch 3,
wobei die Temperatur des Eindickungs-Heißwassers (F) im Bereich von 60 °C oder höher und 90 °C oder niedriger liegt.

5. Das Verfahren zur Behandlung von organischem Schlamm nach irgendeinem der Ansprüche von 3 bis 4,
wobei dem durch die Eindickungseinrichtung (2) eingedickten organischen Schlamm (A) ein Koagulans (G) zugesetzt wird.

6. Das Verfahren zur Behandlung von organischem Schlamm nach irgendeinem der Ansprüche von 3 bis 5,
wobei das aus der Entwässerungseinrichtung (3) abgegebene Entwässerungs-Heißwasser (H) umgewälzt wird und der Eindickungseinrichtung (2) als Eindickungs-Heißwasser (F) zugeführt wird.

## Revendications

1. Un procédé de traitement de boues organiques destiné à la déshydratation d'une boue organique (A) à l'aide d'un moyen de déshydratation (3), dans lequel
la boue organique (A), à laquelle a été ajouté un coagulant polymère (B), est coagulée par des moyens de coagulation (1) pour former une boue coagulée (C),
la boue coagulée (C) est épaissie par un moyen d'épaississement (2) pour former une boue épaissie (D), et dans lequel
la boue épaissie (D) est déshydratée par un moyen de déshydratation (3),
le procédé comprenant :
la disposition d'un ou deux tamis de filtration (3B) formés de fils profilés de type *wedge wire* ou de tôle métallique perforée par poinçonnage et configurés pour filtrer la boue organique (A) dans un carter (3A) centré sur un axe dans le moyen de déshydratation (3),
l'alimentation de la boue épaissie (D) vers un premier espace (3A1), et l'alimentation en eau chaude de déshydratation (H) ayant une température de 50 °C ou plus et inférieure à 100 °C à partir de moyens d'alimentation en eau chaude de déshydratation vers un deuxième espace (3A2) parmi une pluralité d'espaces dans le carter (3A) séparés par ledit un ou lesdits deux tamis de filtration (3B), et
la séparation de l'humidité de la boue épaissie (D) par ledit un ou lesdits deux tamis de filtration (3B) pendant que la boue épaissie (D) est transportée par une rotation relative d'une vis à ruban (3d), entraînée en rotation par rapport audit un ou auxdits deux tamis filtrants (3B) de manière centrée sur l'axe,
**caractérisé en ce que**
l'humidité séparée de la boue épaissie (D) est filtrée à travers ledit un ou lesdits deux tamis de filtration (3B), s'écoule dans le deuxième espace (3A2) et est évacuée conjointement avec l'eau chaude de déshydratation (H) refroidie.

2. Le procédé de traitement de boues organiques d'après la revendication 1,
sachant que la température de l'eau chaude de déshydratation (H) est comprise entre 60 °C ou plus et 90 °C ou moins.

3. Le procédé de traitement de boues organiques d'après la revendication 1 ou 2,
sachant que de l'eau chaude d'épaississement (F) présentant une température de 50 °C ou plus et inférieure à 100 °C est fournie par un moyen d'alimentation en eau chaude d'épaississement au moyen d'épaississement (2) afin d'être mélangée à la boue organique (A).

4. Le procédé de traitement de boues organiques d'après la revendication 3,
sachant que la température de l'eau chaude d'épaississement (F) est comprise entre 60 °C ou plus et 90 °C ou moins.

5. Le procédé de traitement de boues organiques d'après l'une quelconque des revendications de 3 à 4,
sachant qu'un coagulant (G) est ajouté à la boue organique (A) épaissie par le moyen d'épaississement (2).

6. Le procédé de traitement de boues organiques d'après l'une quelconque des revendications de 3 à 5,
sachant que l'eau chaude de déshydratation (H) évacuée du moyen de déshydratation (3) est recirculée et fournie au moyen d'épaississement (2) en tant qu'eau chaude d'épaississement (F).
